# FASCICULE DE BREVET EUROPEEN

(11) **EP 1 223 312 B1**
(45) Date de publication et mention de la délivrance du brevet: **27.10.2004**
(21) Numéro de dépôt: 02290069.0
(22) Date de dépôt: 11.01.2002
(51) Int. Cl.: F01N 3/08, F01N 3/023

(54) **Système de traitement des gaz d'échappement d'un moteur à combustion et procédé de pilotage d'un tel système**
Abgasnachbehandlungssystem für einen Verbrennungsmotor und Verfahren zur Regelung eines solchen Systems
Exhaust gas after-treatment system for a combustion engine and method of controling such a system

(30) Priorité: 12.01.2001 FR 0100357
(43) Date de publication de la demande: 17.07.2002
(73) Titulaire: Renault s.a.s., 92100 Boulogne Billancourt (FR)
(72) Inventeur: Calvo, Sabine, 78340 Les Clayes Sous Bois (FR)

(56) Documents cités:
- EP-A- 0 540 280
- EP-A- 0 862 941
- PATENT ABSTRACTS OF JAPAN vol. 018, no. 491 (M-1672), 13 septembre 1994 (1994-09-13) & JP 06 159037 A (TOYOTA MOTOR CORP), 7 juin 1994 (1994-06-07)

## Description

L'invention propose un système de traitement des gaz d'échappement d'un moteur à combustion.

L'invention propose plus particulièrement un système de traitement des gaz d'échappement d'un moteur à combustion, notamment d'un moteur diesel ou d'un moteur à essence à mélange pauvre, du type comportant un filtre à particules disposé dans une ligne principale d'échappement dans laquelle s'écoulent les gaz d'échappement du moteur.

L'invention propose aussi un procédé de pilotage d'un système de traitement des gaz d'échappement d'un moteur à combustion.

Les moteurs diesel et certains moteurs à essence émettent des substances polluantes telles que des particules. Les particules sont des suies sur lesquelles sont fixés des hydrocarbures imbrûlés insolubles. En effet, lors de la combustion du carburant, certaines zones de la chambre de combustion contiennent un mélange air-carburant trop riche en carburant. La combustion est alors incomplète par manque local d'oxygène. Cela a pour conséquence la formation de particules. Elles se traduisent par des fumées noires polluantes. Pour des raisons de respect de l'environnement, il est nécessaire de diminuer fortement, voire de supprimer ces particules.

On connaît des systèmes de traitement des gaz d'échappement qui permettent de diminuer les substances polluantes, notamment les émissions de particules.

Les catalyseurs d'oxydation permettent de réduire ces fumées. Cependant leur efficacité n'est pas suffisante.

Pour traiter ces particules, une autre méthode consiste à les filtrer à l'aide d'un filtre appelé filtre à particules. Ce dernier se colmate, ce qui provoque une perte de charge dans la conduite d'échappement et par conséquent une baisse des performances du moteur. Il est donc nécessaire de régénérer périodiquement le filtre à particules.

Pour provoquer la combustion des particules, il faut les porter à une température d'environ 450 à 550°C. Cependant, les gaz d'échappement des moteurs, notamment des moteurs diesel, n'atteignent pas cette température puisque par exemple en ville, celle-ci varie entre 150 et 350°C. Il faut alors augmenter spécifiquement la température des gaz d'échappement lors de la phase de régénération de façon qu'ils atteignent la température de combustion des particules dans le filtre à particules.

Différents systèmes sont proposés dans l'état de la technique. Voir par example la publication de la demande de brevet Japonaise JP06159037.

Des systèmes proposent d'augmenter la température des gaz échappement par l'injection d'une quantité supplémentaire de carburant dans au moins une des chambres de combustion du moteur sous la forme d'une post-injection. Une partie de cette quantité de carburant supplémentaire s'enflamme en produisant une augmentation de la température des gaz d'échappement. De tels systèmes provoquent une augmentation de la consommation du moteur en carburant.

Des systèmes de chauffage par résistance électrique, notamment par des grilles chauffantes électriques, permettent aussi de porter la température des gaz échappement à une valeur suffisante pour provoquer la combustion des particules dans le filtre. Cependant, ces systèmes nécessitent une puissance électrique importante pour assurer le chauffage de l'ensemble du débit des gaz d'échappement issu du moteur. De plus, ils complexifient la ligne d'échappement par l'ajout de l'élément chauffant, ainsi que de ses moyens d'alimentation et de commande.

Dans les deux cas les systèmes proposés nécessitent un apport supplémentaire d'énergie sous forme de carburant ou d'électricité, ce qui augmente la consommation du moteur en carburant.

La combustion peut aussi résulter de l'oxydation des particules par des substances oxydantes telles que l'oxygène. En effet, cette réaction produit notamment du dioxyde de carbone. Cependant elle nécessite une température des gaz d'échappement de l'ordre de 600°C. Cette température est impossible à atteindre sans apport supplémentaire de chaleur en amont du filtre à particules.

Dans le but de favoriser la régénération du filtre à particules en minimisant l'apport supplémentaire d'énergie, l'invention propose un système de traitement des gaz d'échappement d'un moteur à combustion, notamment d'un moteur diesel ou d'un moteur à essence à mélange pauvre, du type comportant un filtre à particules disposé dans une ligne principale d'échappement dans laquelle s'écoulent les gaz d'échappement du moteur,
un piège à oxydes d'azote disposé en amont du filtre à particules de façon que les oxydes d'azote libérés lors de la régénération du piège favorisent la combustion des particules, en ce que le système de traitement comporte des premiers moyens de chauffage des gaz d'échappement situés en amont du piège à oxydes d'azote pour augmenter sa température à une température optimale de régénération,
des moyens pour réduire le débit des gaz d'échappement dans la ligne principale qui sont situés en amont des premiers moyens de chauffage, de façon à réduire la quantité de gaz d'échappement qui traverse le piège à oxydes d'azote lors de la régénération du piège à oxydes d'azote.
caractérisé en ce que
- lesdits moyens pour réduire le débit des gaz d'échappement dans la ligne principale comportent une ligne secondaire d'écoulement des gaz d'échappement qui est branchée en dérivation sur la ligne principale, et dans laquelle le débit des gaz est piloté par l'intermédiaire d'une vanne de dérivation commandée qui permet, lorsque le piège à oxydes d'azote absorbe les oxydes d'azote, de bloquer le passage des gaz d'échappement dans la ligne secondaire et qui permet, lors de la régénération du piège à oxydes d'azote, de répartir le débit des gaz d'échappement dans chacune des deux lignes de façon à réduire la quantité de gaz d'échappement qui traverse le piège à oxydes d'azote ;
- le système de traitement comprend un système d'injection de substance réductrice, qui est situé en amont du piège à oxydes d'azote dans la ligne principale et qui est susceptible d'injecter une quantité prédéterminée de substance réductrice, lors de la régénération du piège, notamment pour diminuer sa température optimale de régénération ;
- le système d'injection est situé en aval des moyens pour réduire le débit des gaz d'échappement dans la ligne principale ;
- le filtre à particules comporte des seconds moyens de chauffage qui permettent d'augmenter la température des particules stockées dans le filtre et de favoriser leur combustion ;
- le système de traitement comporte des moyens de mesure de la concentration en oxydes d'azote dans les gaz d'échappement en aval du piège à oxydes d'azote correspondant à la valeur du niveau de saturation du piège à oxydes d'azote ;
- le système de traitement comporte des moyens pour déterminer la valeur du niveau de chargement du filtre à particules.

L'invention propose aussi un procédé de pilotage d'un système de traitement, du type décrit précédemment, des gaz d'échappement d'un moteur à combustion, notamment d'un moteur diesel ou d'un moteur à essence à mélange pauvre, caractérisé en ce que, lorsque la valeur du niveau de saturation du piège à oxydes d'azote est comprise entre une première valeur minimum et une première valeur maximum prédéterminées la régénération du piège à oxydes d'azote est opérée de façon à libérer les oxydes d'azotes absorbés dans le piège.

Selon d'autres caractéristiques du procédé selon l'invention :
- lors de la régénération du piège à oxydes d'azote, la vanne de dérivation est commandée pour réduire la quantité de gaz d'échappement qui traverse le piège à oxydes d'azote, et les premiers moyens de chauffage sont actionnés pour augmenter la température du piège jusqu'à la température optimale de régénération du piège à oxydes d'azote ;
- le système d'injection injecte la quantité prédéterminée de substance réductrice qui correspond à une première quantité prédéterminée qui permet de diminuer la température optimale de régénération du piège à oxydes d'azote sans réduire les oxydes d'azote libérés ;
- le système d'injection injecte la quantité prédéterminée de substance réductrice qui correspond à une seconde quantité prédéterminée qui permet de diminuer la température optimale de régénération du piège à oxydes d'azote et de réduire au moins partiellement les oxydes d'azote libérés.

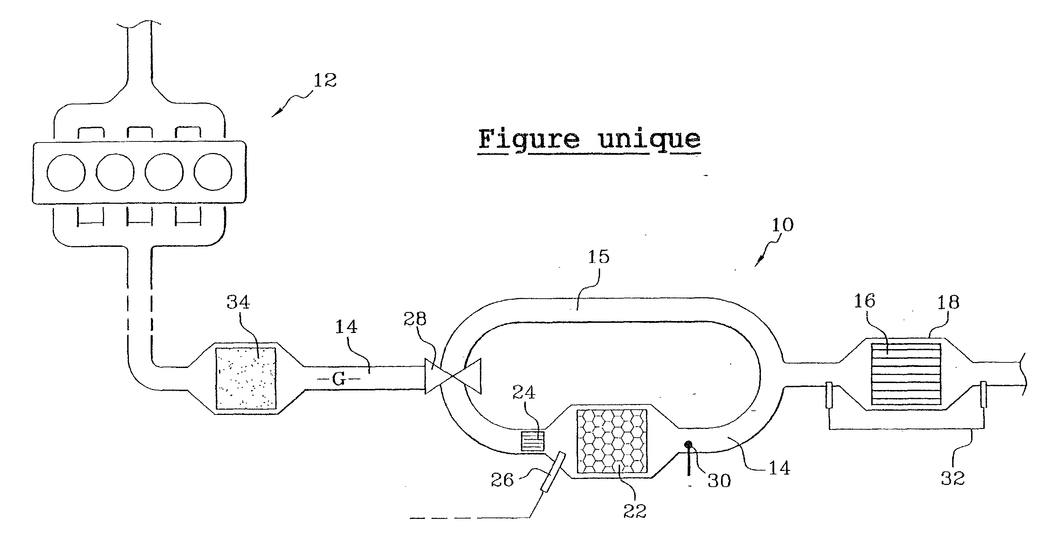

D'autres caractéristiques et avantages de l'invention apparaîtront à la lecture de la description détaillée qui suit pour la compréhension de laquelle on se reportera à la figure unique qui représente schématiquement une ligne d'échappement d'un moteur à combustion équipée d'un système de traitement des gaz d'échappement réalisé selon l'invention.

On a représenté sur la figure unique un système de traitement 10 des gaz d'échappement G d'un moteur à combustion 12. Le moteur 12 est un moteur diesel ou un moteur à essence fonctionnant en mélange pauvre tel qu'un moteur à essence à injection directe comportant au moins une chambre de combustion et un piston.

Une ligne 14 d'échappement permet l'écoulement des gaz G du moteur 12 vers l'atmosphère. Un système de traitement destiné à purifier les gaz d'échappement G est interposé dans de la ligne 14. Il se compose principalement d'un filtre 16 à particules situé dans une chambre 18.

Avantageusement, le filtre 16 à particules est recouvert d'une imprégnation catalytique qui permet par exemple le traitement de substances polluantes telles que le monoxyde de carbone et/ou les hydrocarbures.

L'imprégnation catalytique peut aussi être du type NOx-trap qui permet le stockage des oxydes d'azote.

Une telle imprégnation favorise alors le contact entre les particules stockées dans le filtre 16 et les oxydes d'azote stockés dans l'imprégnation ce qui permet ainsi la réduction des oxydes d'azote en azote simultanément à l'oxydation des particules.

Le filtre 16 à particules est du type en nid d'abeilles. Il se présente avec une face d'entrée amont et une face de sortie aval des gaz G. Il est composé de canaux alternativement bouchés et ouverts en entrée et qui sont inversement ouverts et bouchés en sortie. Les parois du filtre 16 à particules sont poreuses et permettent la filtration des gaz d'échappement G.

Conformément à l'invention, un piège 22 à oxydes d'azote est disposé en amont du filtre 16 à particules.

Un tel dispositif permet de diminuer les émissions dans l'atmosphère des oxydes d'azote produits par le moteur.

En effet, la combustion d'un mélange d'air et de carburant, notamment d'un mélange pauvre (c'est-à-dire présentant un excès d'air), produit des oxydes d'azote ou NOx qu'il est nécessaire de traiter par conversion catalytique, notamment par réduction en azote N₂. Cependant, le mélange carburé étant pauvre, les gaz d'échappement issus du moteur sont oxydants. Cela rend difficile la réduction des oxydes d'azote.

Le piège 22 à oxydes d'azote permet, lorsque les gaz d'échappement sont oxydants (c'est à dire riches en oxygène), de stocker les oxydes d'azote contenus dans les gaz d'échappement. Le piège 22 à oxydes d'azote est régénéré périodiquement de façon à libérer les oxydes d'azotes notamment sous forme de dioxydes d'azote.

Les oxydes d'azotes libérés peuvent ensuite, selon la composition et la température des gaz d'échappement G, être traités, notamment réduits en azote.

Le piège 22 à oxydes d'azote peut aussi être appelé NOxtrap.

La régénération du piège 22 à oxydes d'azote consiste à augmenter la température des gaz d'échappement G qui le traversent. La température de régénération optimale est de l'ordre de 500°C. Elle peut être atteinte par une augmentation de la quantité de carburant dans les chambres de combustion du moteur 12 de façon à augmenter la température des gaz d'échappement G. Cependant une telle solution provoque une augmentation importante de la quantité de carburant consommé.

Ainsi, l'invention propose que le système de traitement 10 comporte des premiers moyens de chauffage 24 situés en amont du piège 22 à oxydes d'azote. De plus, il est prévu des moyens pour réduire le débit des gaz d'échappement G dans la ligne principale 14.

Les moyens de réduction du débit des gaz qui sont situés en amont des premiers moyens de chauffage 24, de façon à réduire la quantité des gaz d'échappement qui traverse le piège 22 à oxydes d'azote lors de la régénération du piège 22 à oxydes d'azote.

La réduction du débit des gaz d'échappement G dans la ligne principale 14 permet de réduire proportionnellement la quantité de chaleur à fournir par les premiers moyens de chauffage 24 pour augmenter la température des gaz d'échappement G à la température optimale de régénération du piège 22 à oxydes d'azote, par rapport à la quantité de chaleur à fournir pour augmenter la température de la totalité du débit des gaz d'échappement G à la température de régénération du piège 22.

La régénération du piège 22 à oxydes d'azote provoque la libération des oxydes d'azote sous forme de dioxyde d'azote qui est une substance fortement oxydante.

L'accumulation d'oxydes d'azote et la régénération périodique du piège 22 permettent d'augmenter de façon ponctuelle la concentration en dioxyde d'azote des gaz d'échappement G qui traversent le filtre 16 à particules.

Le dioxyde d'azote permet alors d'oxyder les particules stockées dans le filtre 16. Cette réaction d'oxydation est rapide et peut se produire à des températures de l'ordre de 200°C.

Ainsi, le dioxyde d'azote libéré lors de la régénération du piège 22 favorise la combustion par oxydation des particules stockées dans le filtre 16 à particules.

La régénération du filtre 16 à particules peut ainsi être réalisée à une température qui peut correspondre à la température moyenne des gaz d'échappement G produits par le moteur 12.

La synergie des régénérations du piège 22 à oxydes d'azote et du filtre 16 à particules permet de diminuer la quantité d'énergie supplémentaire nécessaire à la régénération du filtre 16 à particules. Lorsque les gaz d'échappement en amont du filtre 16 à particules sont suffisamment chauds pour permettre la réaction d'oxydation des particules, aucune quantité d'énergie supplémentaire n'est nécessaire.

Selon une variante, le filtre 16 à particules peut comporter des seconds moyens de chauffage, non représentés, qui permettent d'augmenter la température des particules stockées pour favoriser leur combustion.

Les seconds moyens de chauffage peuvent être activés dans certaines conditions notamment, lorsque la concentration en dioxyde d'azote et/ou la température des gaz d'échappement sont trop faibles pour permettre une régénération suffisante du filtre 16 à particules.

Les seconds moyens de chauffage peuvent comporter une résistance électrique chauffante qui est alimentée en électricité lors de l'initiation de la régénération du filtre 16 à particules.

Les seconds moyens de chauffage peuvent aussi être constitués par au moins une zone du filtre 16 à particules qui est utilisée comme résistance électrique de chauffage. Par exemple, lorsque les parois poreuses du filtre 16 à particules sont métalliques, elles sont chauffées lorsqu'elles sont traversées par un courant électrique.

Conformément à la figure unique, les moyens pour réduire le débit des gaz d'échappement G dans la ligne principale comportent une ligne secondaire 15 d'écoulement des gaz d'échappement G qui est branchée en dérivation sur la ligne principale 14.

Une vanne commandée de dérivation 28 permet de piloter la répartition du débit des gaz d'échappement G entre la ligne principale 14 et la ligne secondaire 15.

Lorsque le piège 22 à oxydes d'azote absorbe les oxydes d'azote, la vanne de dérivation 28 bloque le passage des gaz d'échappement G dans la ligne secondaire 15. Lors de la régénération du piège 22 à oxydes d'azote, la vanne de dérivation 28 répartit le débit des gaz d'échappement G dans chacune des deux lignes principale 14 et secondaire 15 de façon à réduire le débit de gaz d'échappement G qui traverse le piège 22 à oxydes d'azote.

Le système de traitement 10 selon l'invention peut aussi comporter un système d'injection 26 de substance réductrice, qui est situé en amont du piège 22 à oxydes d'azote dans la ligne principale 14.

Le système d'injection 26 est susceptible d'injecter une quantité prédéterminée Q de substance réductrice, lors de la régénération du piège 22 à oxydes d'azote.

L'injection d'une première quantité prédéterminée Q1 de substance réductrice permet notamment de réduire la température optimale de régénération du piège 22 à oxydes d'azote.

Avantageusement, conformément à la figure, le système d'injection 26 est situé en aval de la vanne de dérivation 28 de façon que la totalité de la quantité Q de la substance réductrice traverse le piège 22 à oxydes d'azote et participe à la réduction de la température optimale de régénération du piège 22.

Le système de traitement comporte ici des moyens de mesure 30 de la concentration en oxydes d'azote dans les gaz d'échappement G en aval du piège 22 à oxydes d'azote. La concentration des qxydes d'azote des gaz correspond à la valeur du niveau de saturation du piège 22 à oxydes d'azote.

La valeur du niveau de saturation du piège 22 permet de déterminer l'instant initial de la régénération du piège 22.

La valeur du niveau de saturation du piège 22 peut aussi permettre de déterminer la première quantité Q1. En effet, la première quantité Q1 dépend notamment de la quantité d'oxydes d'azote absorbés dans le piège 22.

Le système de traitement 10 comporte aussi des moyens 32 pour déterminer la valeur du niveau de chargement du filtre 16 à particules.

Les moyens 32 sont par exemple une sonde de pression qui est reliée à deux prises de pression placées respectivement en amont et en aval du filtre 16 à particules.

Les prises de pression de la sonde de pression permettent de déterminer la valeur de la perte de charge entre l'entrée et la sortie du filtre 16 à particules qui est représentative de son niveau de chargement.

Avantageusement, un catalyseur d'oxydation 34 est aussi inséré dans la ligne 14 d'échappement en amont du piège 22 à oxydes d'azote. Il permet de transformer une partie du monoxyde d'azote émis dans les gaz d'échappement du moteur en dioxyde d'azote qui sont une espèce qui est plus facilement stockée dans le piège 22 à oxydes d'azote.

L'invention propose aussi un procédé de pilotage du système de traitement 10 des gaz d'échappement G décrit ci-dessus.

En effet, il est avantageux de contrôler le déclenchement de la régénération du piège 22 à oxydes d'azote et la régénération du filtre 16 à particules de façon à minimiser l'apport supplémentaire d'énergie.

On a vu précédemment que le dioxyde d'azote libéré lors de la régénération du piège 22 à oxydes d'azote favorise la régénération du filtre 16 à particules.

Cependant, le piège 22 et le filtre 16 ont des capacités d'absorption et de stockage différentes respectivement. Ainsi, les durées d'utilisation ou les distances parcourues par le véhicule entre deux régénérations du piège 22 et du filtre 16 sont différentes.

La régénération du piège 22 à oxydes d'azote doit être effectuée lorsque son niveau de saturation est compris entre une première valeur minimum et une première valeur maximum.

De façon similaire la régénération du filtre 16 à particules doit être effectuée avant que son niveau de chargement n'atteigne une seconde valeur maximum.

En effet, si la valeur du niveau de chargement du filtre 16 est supérieure à la seconde valeur maximum, la quantité de particules stockées à l'intérieur du filtre 16 est trop importante. Ainsi, la chaleur dégagée par la combustion des particules provoque une augmentation de la température à l'intérieur du filtre 16 qui risque de l'endommager ou de le détruire.

On appelle durée de chargement et durée de saturation, les durées maximales qui s'écoulent pour que le filtre 16 et le piège 22 atteignent leur première et leur seconde valeur maximum respectivement.

Par exemple, pour le filtre 16 à particules, la durée de chargement correspond à la durée qui s'écoule entre la fin d'une régénération et l'instant auquel le niveau de chargement du filtre 16 atteint la seconde valeur maximale.

En général, la durée de chargement du filtre 16 à particules est très supérieure à la durée de saturation du piège 22 à oxydes d'azote.

Dans la suite, on considère, à titre non limitatif, d'une part que la durée de chargement du filtre 16 à particules est très supérieure à la durée de saturation du piège 22 à oxydes d'azote.

Ainsi, lorsque la valeur du niveau de saturation du piège 22 à oxydes d'azote est comprise entre la première valeur minimum et la première valeur maximum prédéterminées la régénération du piège 22 à oxydes d'azote est opérée de façon à libérer les oxydes d'azotes absorbés dans le piège 22.

L'instant initial de la régénération du piège 22 peut dépendre de paramètres tels que certaines conditions de fonctionnement du moteur 12.

En effet, dans certains cas. les conditions de fonctionnement du moteur 12 sont favorables à la régénération du piège 22, c'est-à-dire par exemple que la température des gaz d'échappement G est élevée ou que leur composition est favorable à la libération des oxydes d'azote absorbés. Dans ce cas il est préférable de régénérer le piège 22 alors que son niveau de saturation n'a pas atteint la première valeur maximum prédéterminée.

La régénération du piège 22 consiste notamment à augmenter la température du piège 22 de façon à permettre la libération des oxydes d'azote absorbés.

Lors de la régénération du piège 22, la vanne de dérivation 28 est commandée pour réduire la quantité de gaz d'échappement qui traverse le piège 22 à oxydes d'azote. Quasiment concomitamment, les premiers moyens de chauffage 24 sont actionnés pour augmenter la température du piège 22 jusqu'à sa température optimale de régénération.

Lors de la régénération du piège 22, il peut se produire deux cas de figure.

Dans le premier cas de figure, la quantité de particules stockées dans le filtre 16 à particules est supérieure à la quantité de particules qui peut être oxydée par les oxydes d'azote libérés. Ainsi, le dioxyde d'azote libéré par la régénération du piège 22 permet d'oxyder au moins partiellement les particules stockées dans le filtre 16, de façon à le régénérer au moins partiellement.

Pour diminuer la température optimale de régénération du piège 22 à oxydes d'azote, le système d'injection 26 peut injecter la première quantité Q1 de substance réductrice prédéterminée.

La substance réductrice est par exemple le carburant utilisé par le moteur 12

Dans le second cas de figure, la quantité de particules stockées dans le filtre 16 à particules est inférieure à la quantité de particules qui peut être oxydée par les oxydes d'azote libérés.

Le système d'injection peut alors injecter une seconde quantité Q2 de substance réductrice qui permet de diminuer la température optimale de régénération du piège 22 et qui permet aussi de réduire partiellement le dioxyde d'azote libéré en azote N₂. Les oxydes d'azote qui ne sont pas réduits permettent alors l'oxydation des particules stockées dans le filtre 16 à particules.

Un tel procédé permet de minimiser l'apport supplémentaire d'énergie ainsi que la quantité de substances polluantes émises dans l'atmosphère.

La valeur de la seconde quantité Q2 de substance réductrice dépend de la quantité d'oxydes d'azote absorbés dans le piège 22 à oxydes d'azote et de la quantité de particules stockées dans le filtre 16 à particules. Ainsi, la seconde quantité Q2 peut être déterminée à partir de la valeur du niveau de saturation du piège 22 mesurée par les moyens de mesures 30 et la valeur du niveau de chargement du filtre 16 à particules déterminée par les moyens 32.

Le procédé de pilotage selon l'invention permet ainsi de réduire, voire de supprimer, l'apport d'énergie supplémentaire pour la régénération du filtre 16 à particules. De plus, il permet d'optimiser l'apport énergie supplémentaire pour la régénération du piège 22 à oxydes d'azote.

En effet, les moyens pour réduire le débit des gaz d'échappement dans la ligne principale 14 permettent de minimiser l'apport de chaleur par les premiers moyens de chauffage 24, ainsi que l'éventuel apport d'une substance réductrice par le système d'injection 26.

Le système d'injection 26 permet, en fonction de la quantité d'oxydes d'azote absorbés dans le piège 22 et de la quantité de particules stockées dans le filtre 16 à particules, d'injecter précisément la première Q1 ou la seconde Q2 quantité de substance réductrice de façon à diminuer la température optimale de régénération du piège 22. Ainsi, la quantité d'énergie supplémentaire pour les régénérations du filtre 16 à particules et du piège 22 à oxydes d'azote est minimisée.

## Revendications

1. Système de traitement (10) des gaz d'échappement (G) d'un moteur à combustion (12), notamment d'un moteur diesel ou d'un moteur à essence à mélange pauvre, du type comportant un filtre à particules (16) disposé dans une ligne principale d'échappement (14) dans laquelle s'écoulent les gaz d'échappement (G) du moteur, un piège (22) à oxydes d'azote disposé en amont du filtre (16) à particules de façon que les oxydes d'azote libérés lors de la régénération du piège (22) favorisent la combustion des particules, en ce que le système de traitement (10) comporte des premiers moyens de chauffage (24) des gaz d'échappement situés en amont du piège (22) à oxydes d'azote pour augmenter sa température à une température optimale de régénération, des moyens pour réduire le débit des gaz d'échappement (G) dans la ligne principale (14) qui sont situés en amont des premiers moyens de chauffage (24), de façon à réduire la quantité de gaz d'échappement (G) qui traverse le piège (22) à oxydes d'azote lors de la régénération du piège (22) à oxydes d'azote, **caracterisé en ce que** lesdits moyens pour réduire le débit des gaz d'échappement (G) dans la ligne principale comportent une ligne secondaire (15) d'écoulement des gaz d'échappement qui est branchée en dérivation sur la ligne principale (14), et dans laquelle le débit des gaz (G) est piloté par l'intermédiaire d'une vanne de dérivation (28) commandée qui permet, lorsque le piège (22) à oxydes d'azote absorbe les oxydes d'azote, de bloquer le passage des gaz d'échappement (G) dans la ligne secondaire (15) et qui permet, lors de la régénération du piège (22) à oxydes d'azote, de répartir le débit des gaz d'échappement (G) dans chacune des deux lignes (14, 15) de façon à réduire le débit de gaz d'échappement (G) qui traverse le piège (22) à oxydes d'azote.

2. Système de traitement selon la revendication 1, **caractérisé en ce qu'**il comprend un système d'injection (26) de substance réductrice, qui est situé en amont du piège (22) à oxydes d'azote dans la ligne principale (14) et qui est susceptible d'injecter une quantité prédéterminée (Q) de substance réductrice, lors de la régénération du piège (22), notamment pour diminuer sa température optimale de régénération.

3. Système de traitement selon la revendication précédente, **caractérisé en ce que** le système d'injection (26) est situé en aval des moyens pour réduire le débit des gaz d'échappement (G) dans la ligne principale (14).

4. Système de traitement selon l'une quelconque des revendications précédentes, **caractérisé en ce que** le filtre (16) à particules comporte des seconds moyens de chauffage qui permettent d'augmenter la température des particules stockées dans le filtre (16) et de favoriser leur combustion.

5. Système de traitement selon l'une quelconque des revendications précédentes, **caractérisé en ce qu'**il comporte des moyens de mesure (30) de la concentration en oxydes d'azote dans les gaz d'échappement (G) en aval du piège (22) à oxydes d'azote correspondant à la valeur du niveau de saturation du piège (22) à oxydes d'azote.

6. Système de traitement selon l'une quelconque des revendications précédentes, **caractérisé en ce qu'**il comporte des moyens (32) pour déterminer la valeur du niveau de chargement du filtre à particules (16).

7. Procédé de pilotage d'un système de traitement (10) des gaz d'échappement (G) d'un moteur à combustion (12). notamment d'un moteur diesel ou d'un moteur à essence à mélange pauvre, selon la revendication 5, **caractérisé en ce que**, lorsque la valeur du niveau de saturation du piège (22) à oxydes d'azote est comprise entre une première valeur minimum et une première valeur maximum prédéterminées la régénération du piège (22) à oxydes d'azote est opérée de façon à libérer les oxydes d'azotes absorbés dans le piège (22).

8. Procédé de pilotage selon la revendication précédente prise en combinaison avec revendication 2, **caractérisé en ce que**, lors de la régénération du piège (22) à oxydes d'azote, la vanne de dérivation (28) est commandée pour réduire la quantité de gaz d'échappement qui traverse le piège (22) à oxydes d'azote, et **en ce que** les premiers moyens de chauffage (24) sont actionnés pour augmenter la température du piège (22) jusqu'à la température optimale de régénération du piège (22) à oxydes d'azote.

9. Procédé de pilotage selon la revendication précédente prise en combinaison avec les revendications 6 et 2, **caractérisé en ce que** le système d'injection (26) injecte la quantité prédéterminée (Q) de substance réductrice qui correspond à une première quantité (Q1) prédéterminée qui permet de diminuer la température optimale de régénération du piège (22) à oxydes d'azote sans réduire les oxydes d'azote libérés.

10. Procédé de pilotage selon la revendication 9 prise en combinaison avec les revendications 6 et 2, **caractérisé en ce que** le système d'injection (22) injecte la quantité (Q) prédéterminée de substance réductrice qui correspond à une seconde quantité (Q2) prédéterminée qui permet de diminuer la température optimale de régénération du piège (22) à oxydes d'azote et de réduire au moins partiellement les oxydes d'azote libérés.

## Patentansprüche

1. System zur Behandlung (10) von Abgasen (G) eines Verbrennungsmotors (12), insbesondere eines Dieselmotors oder eines Benzinmotors mit magerem Gemisch, von dem Typ, der einen Partikelfilter (16) aufweist, der in einer Hauptabgasleitung (14) angebracht ist, in welcher die Abgase (G) des Motors strömen,
eine Falle (22) für Stickoxide, angebracht stromaufwärts des Filters (16) für Partikel, damit die bei der Regenerierung der Falle (22) freigesetzten Stickoxide die Verbrennung von Partikeln begünstigen, wobei das System zur Behandlung (10) erste Heizmittel (24) für Abgase umfasst, die stromaufwärts der Falle (22) für Stickoxide liegen, um ihre Temperatur auf eine optimale Regenerierungstemperatur zu erhöhen,
Mittel zum Reduzieren des Durchsatzes der Abgase (G) in der Hauptleitung (14), welche stromaufwärts der ersten Heizmittel (24) liegen, um die Menge der Abgase (G), welche die Falle (22) für Stickoxide bei der Regenerierung der Falle (22) für Stickoxide durchströmt, zu reduzieren,
**dadurch gekennzeichnet, dass** die Mittel zum Reduzieren des Durchsatzes der Abgase (G) in der Hauptleitung eine Nebenleitung (15) für den Durchsatz von Abgasen aufweisen, die von der Hauptleitung (14) abzweigt und in welcher der Durchsatz der Abgase (G) über ein gesteuertes Ableitungsventil (28) gesteuert wird, welches erlaubt, wenn die Falle (22) für Stickoxide die Stickoxide absorbiert, den Durchgang der Abgase (G) in die Nebenleitung (15) zu blockieren und welche erlaubt, bei der Regenerierung der Falle (22) für Stickoxide, den Strom der Abgase (G) auf jede der beiden Leitungen (14, 15) aufzuteilen, um den Strom der Abgase (G) zu reduzieren, welcher die Falle (22) für Stickoxide durchströmt.

2. System zur Behandlung nach Anspruch 1, **dadurch gekennzeichnet, dass** es ein Einspritzsystem (26) für reduzierende Substanz umfasst, welches stromaufwärts der Falle (22) für Stickoxide in der Hauptleitung (14) liegt und welches geeignet ist, eine vorbestimmte Menge (Q) von reduktiver Substanz einzuspritzen, bei der Regenerierung der Falle (22), insbesondere um seine optimale Regenerierungstemperatur zu vermindern.

3. System zur Behandlung nach dem vorhergehenden Anspruch, **dadurch gekennzeichnet, dass** das Einspritzsystem (26) stromabwärts der Mittel zum Reduzieren des Stroms der Abgase (G) in der Hauptleitung (14) liegt.

4. System zur Behandlung nach einem der vorhergehenden Ansprüche, **dadurch gekennzeichnet, dass** der Filter (16) für Partikel zweite Heizmittel aufweist, welche die Temperatur der in dem Filter (16) gelagerten Partikel erhöhen und ihre Verbrennung begünstigen.

5. System zur Behandlung nach einem der vorhergehenden Ansprüche, **dadurch gekennzeichnet, dass** es Messmittel (30) für die Konzentration von Stickoxiden in den Abgasen (G) stromabwärts der Falle (22) für Stickoxide aufweist, welche dem Wert des Sättigungsniveaus der Falle (22) für Stickoxide entspricht.

6. System zur Behandlung nach einem der vorhergehenden Ansprüche, **dadurch gekennzeichnet, dass** es Mittel (32) zum Bestimmen des Werts des Ladungsniveaus des Partikelfilters (16) enthält.

7. Verfahren zur Steuerung eines Systems zur Behandlung (10) der Abgase (G) eines Verbrennungsmotors (12), insbesondere eines Dieselmotors oder eines Benzinmotors mit magerem Gemisch, nach Anspruch 5, **dadurch gekennzeichnet, dass**, wenn der Wert des Sättigungsniveaus der Falle (22) für Stickoxide zwischen einem vorbestimmten ersten Minimalwert und einem vorbestimmten ersten Maximalwert enthalten ist, die Regenerierung der Falle (22) für Stickoxide ausgeführt wird, um die in der Falle (22) absorbierten Stickoxide freizusetzen.

8. Verfahren zur Steuerung nach dem vorhergehenden Anspruch, in Kombination mit Anspruch 1, **dadurch gekennzeichnet, dass**, bei der Regenerierung der Falle (22) für Stickoxide, das Ableitungsventil (28) gesteuert wird, um die Menge der Abgase zu reduzieren, welche die Falle (22) für Stickoxide durchqueren und dadurch, dass die ersten Heizmittel (24) betätigt werden, um die Temperatur der Falle (22) bis zu einer optimalen Regenerierungstemperatur der Falle (22) für Stickoxide zu erhöhen.

9. Verfahren zur Steuerung nach dem vorhergehenden Anspruch, in Kombination mit den Ansprüchen 6 und 2, **dadurch gekennzeichnet, dass** das Einspritzsystem (26) die vorbestimmte Menge (Q) von reduzierender Substanz einspritzt, welche einer ersten vorbestimmten Menge (Q1) entspricht, welche erlaubt, die optimale Regenerierungstemperatur der Falle (22) für Stickoxide zu vermindern, ohne die freigesetzten Stickoxide zu reduzieren.

10. Verfahren zur Steuerung nach Anspruch 9, in Kombination mit den Ansprüchen 6 und 2, **dadurch gekennzeichnet, dass** das Einspritzsystem (22) die vorbestimmte Menge (Q) von reduzierender Substanz einspritzt, welche einer zweiten vorbestimmten Menge (Q2) entspricht, die erlaubt, die optimale Regenerierungstemperatur der Falle (22) für Stickoxide zu vermindern und mindestens teilweise die freigesetzten Stickoxide zu reduzieren.

## Claims

1. A system (10) for treating the exhaust gases (G) from a combustion engine (12), in particular a diesel engine or a poor mixture petrol engine, of the type comprising a particle filter (16) arranged in a main exhaust line (14) in which the engine exhaust gases(G) flow, a nitrogen oxide trap (22) arranged upstream of the particle filter (16) in such a way that the nitrogen oxides released during regeneration of the trap (22) encourage the combustion of the particles, in that the treatment system (10) comprises first means for heating (24) the exhaust gases situated upstream of the nitrogen oxide trap (22) in order to increase its temperature to an optimal regeneration temperature, means for reducing the flow of the exhaust gases (G) in the main line (14) which are situated upstream of the first heating means (24) so as to reduce the quantity of exhaust gases (G) which passes through the nitrogen oxide trap (22) during regeneration of the nitrogen oxide trap (22) **characterized in that** said means for reducing the flow of exhaust gases (G) in the main line comprises a secondary line (15) for the flow of exhaust gases which is connected in parallel with the main line (14), and in which the flow of gases (G) is controlled using a controlled by-pass valve (28) which makes it possible, when the nitrogen oxide trap (22) is absorbing the nitrogen oxides, to block the passage of the exhaust gases (G) into the secondary line and which makes it possible, during the regeneration of the nitrogen oxide trap (22), to distribute the flow of exhaust gases (G) in each of the two lines (14,15) in order to reduce the flow of exhaust gases (G) which passes through the nitrogen oxide trap (22).

2. Treatment system according to claim 1, **characterized in that** it comprises a system (26) for injecting a reducing substance, which is situated upstream of the nitrogen oxide trap (22) in the main line (14) and which is capable of injecting a predetermined quantity (Q) of reducing substance, during the regeneration of the trap (22), in particular in order to reduce its optimal regeneration temperature.

3. Treatment system according to the preceding claim, **characterized in that** the injection system (26) is situated downstream of the means for reducing the flow of exhaust gases (G) in the main line (14).

4. Treatment system according to any one of the preceding claims, **characterized in that** the particle filter (16) comprises second heating means which makes it possible to increase the temperature of the particles stored in the filter (16) and encourage their combustion.

5. Treatment system according to any one of the preceding claims, **characterized in that** it comprises means (30) for measuring the concentration of nitrogen oxides in the exhaust gases (G) downstream of the nitrogen oxide trap (22) corresponding to the saturation level value of the nitrogen oxide trap (22).

6. Treatment system according to any one of the preceding claims, **characterized in that** it comprises means (32) means for determining the loading level value of the particle filter (16).

7. Control method for a system (10) for treating the exhaust gases (G) from a combustion engine (12), in particular a diesel engine or a poor mixture petrol engine, according to claim 5, **characterized in that**, when the saturation level value of the nitrogen oxide trap (22) is comprised between a predetermined first minimum value and first maximum value the regeneration of the nitrogen oxide trap (22) is operated so as to release the nitrogen oxides absorbed in the trap (22).

8. Control method according to the preceding claim taken in combination with claim 1, **characterized in that**, during regeneration of the nitrogen oxide trap (22), the by-pass valve (28) is controlled in order to reduce the quantity of exhaust gases that passes through the nitrogen oxide trap (22) and **in that** the first heating means (24) are actuated in order to increase the temperature of the trap (22) to an optimal temperature for regenerating the nitrogen oxide trap (22).

9. Control method according to the preceding claim taken in combination with claims 6 and 2, **characterized in that** the injection system (26) injects the predetermined quantity (Q) of reducing substance which corresponds to a first predetermined quantity (Q1) which makes it possible to reduce the optimal regeneration temperature of the nitrogen oxide trap (22) without reducing the nitrogen oxides released;

10. Control method according to claim 9 taken in combination with claims 6 and 2, **characterized in that** the injection system (22) injects the predetermined quantity (q) of reducing substance which corresponds to a second predetermined quantity (Q2) which makes it possible to reduce the optimal regeneration temperature of the nitrogen oxide trap (22) and to reduce, at least partially, of the nitrogen oxides released.
